# EUROPÄISCHE PATENTSCHRIFT

(11) **EP 0 857 373 B1**
(45) Veröffentlichungstag und Bekanntmachung des Hinweises auf die Patenterteilung: **15.11.2000**
(21) Anmeldenummer: 96924777.4
(22) Anmeldetag: 27.07.1996
(51) Int. Cl.: H04B 1/16

(54) **STEREORUNDFUNKEMPFÄNGER**
STEREO RADIO RECEIVER
RECEPTEUR RADIO STEREO

(30) Priorität: 27.10.1995 DE 19540183
(43) Veröffentlichungstag der Anmeldung: 12.08.1998
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: DE9601402
(87) Internationale Veröffentlichungsnummer: WO9716891

(56) Entgegenhaltungen:
- EP-A- 0 030 874
- US-A- 5 432 854

## Beschreibung

### Stand der Technik

Moderne Stereosender sorgen senderseitig für ein Signalformat, das die Basisbreite des Stereosignals und die Kanaltrennung betont und somit den Raumklang einer Stereosendung deutlicher hörbar werden läßt.

Dieser Vorteil beim Empfang moderner Stereosender verliert sich, wenn die Sender den Empfangsort nur mit geringer Feldstärke erreichen; denn eine störungsfreie Kanaltrennung erfordert einen Mindestwert der Feldstärke des Stereosenders am Empfangsort. Daher hat man seit langem aufwendige Stereorundfunkempfänger insbesondere Autoradios mit einem gleitenden Übergang von der Stereo- zur Monowiedergabe ausgerüstet, der von der Empfangsfeldstärke abhängig ist. In solchen Autoradios wird daher bei einem Abfall der Empfangsfeldstärke während der Fahrt die Kanaltrennung automatisch variiert.

Häufig tritt aber neben der Schwankung der Empfangsfeldstärke ein Mehrwegeempfang des eingestellten Senders in von diesem gut versorgten Empfangsgebieten auf. Bei solchem Empfangsverhältnissen macht sich auch bei den erstgenannten Stereorundfunkempfängern, bei denen der gleitende Mono-Stereo-Übergang auf optimale Kanaltrennung eingestellt ist, nachteilig bemerkbar, daß die gute Stereowiedergabe bei Einfahrt in ein Mehrwegeempfangsgebiet schlagartig und oft nur auf kurzen Fahrtstrecken gestört ist. Man hat daher stereofähige Rundfunkempfänger mit einem Detektor für Mehrwegeempfang ausgerüstet, dessen Ausgangssignal einen Umschalter steuert, welcher den Empfänger zwangsweise auf monophone Wiedergabe der Sendung schaltet.

Auf Fahrtstrecken, mit kurzzeitigem Nehrwegeempfang, z. B. auf Straßen mit Hochhausbebauung oder in gebirgigen Gegenden, treten Wechsel zwischen Einweg- und Mehrwegeempfang nicht selten innehrhalb von ein bis zwei Sekunden auf und führen zu entsprechend häufigen Wechseln von einer Stereowiedergabe zur monophonen Wiedergabe einer Stereosendung. Dieser Effekt wird seit langem als so störend empfunden, daß die Autofahrer in gebirgigen Gegenden den Stereodecoder beim Empfang moderner Stereosender ausschalten und auf die Stereowiedergabe ganz verzichten.

Aus der US-A-5,432,854 ist ein Stereorundfunkempfänger bekannt, der in Abhängigkeit von mittels eines Hochpaßfilters aus dem Stereo-Multiplexsignal isolierten Empfangsstörungen, darunter auch Mehrwegeempfang, ein steuersignal zur Reduzierung der Stereo-Kanaltrennung eines wiederzugebenden Audiosignals derart erzeugt, daß bei Auftreten einer Empfangsstörung die Stereokanaltrennung reduziert und nach Ablauf einer vorgegebenen Zeitdauer nach Abklingen der Empfagsstörung wieder auf ihren ursprünglichen Wert angehoben wird.

Weiterhin ist aus der EP-A-0 030 874 eine Anordnung zur Reduzierung der Einflüsse von Empfangsstörungen auf ein wiedergegebenes Audiosignal bekannt, bei der in analoger Weise aus Empfangsstörungen ein Steuersignal abgeleitet wird, mit dem die Bandbreite des wiedergegebenen Audiosignals bei Auftreten einer Störung beeinflußt wird.

### Vorteile der Erfindung

Mit einem gemäß Anspruch 1 ausgebildeten Stereo-Rundfunkempfänger lassen sich nun die vorgenannten Störungen überraschenderweise wesentlich vermindern, wobei außerhalb der Dauer der eigentlichen Störungen eine zumindest teilweise stereophone Wiedergabe wenn auch mit reduzierter Stereo-Kanaltrennung möglich ist.

In den untergeordneten Ansprüchen 3, 4 und 5 sind verschiedene Ausführungsformen eines Stereo-Rundfunkempfängers gemäß Anspruch 1 beschrieben, während in den Ansprüchen 6 und 7 zwei Weiterbildungen der jeweils in den Ansprüchen 3, 4 und 5 genannten Ausführungsformen umrissen sind. Der Anspruch 8 definiert eine Realisierung der Ausführungsform nach Anspruch 3 und deren Weiterbildung nach Anspruch 6 und 7.

### Zeichnung

In der Zeichnung sind zwei verschiedene Ausführungsformen als Blockschaltbilder näher dargestellt. Dabei zeigen
- Figur 1: die Stufen eines bekannten Stereorundfunkempfängers ergänzt durch ein die Stufe zur Kanaltrennung im Stereodecoder steuerndes Zeitglied.
- Figur 2: das Zeitglied in Verbindung mit einem Phasenschieber für die Kanaltrennung im MPX-Signalweg des Stereodecoders.
- Figur 3: eine Darstellung des Ladungsverlaufs an einem Kondensator im Zeitglied.
- Figur 4: das Zeitglied in Verbindung mit einer Schaltung zur gleitenden Mono-Stereo-Umschaltung.

### Beschreibung der Figuren

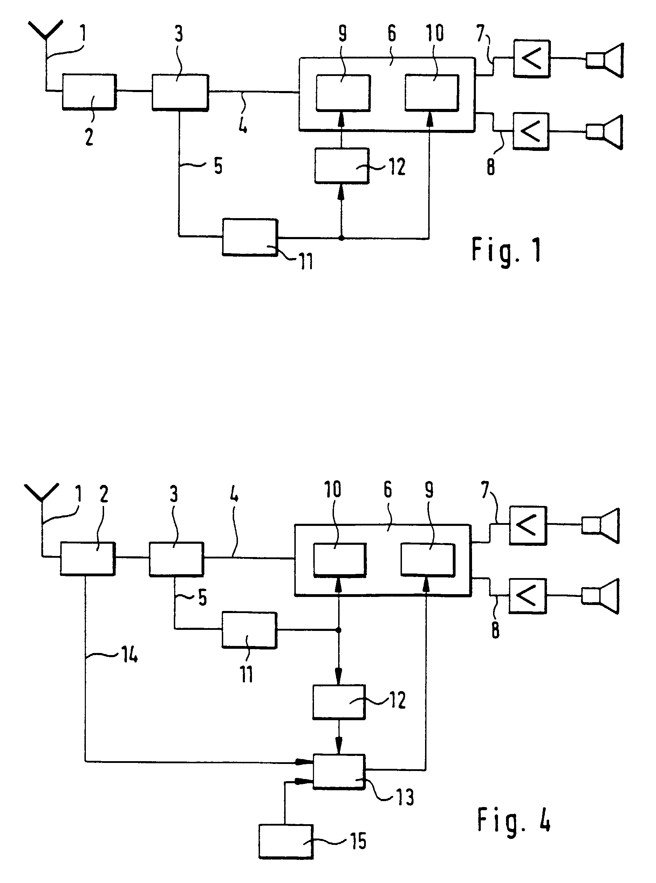

Der in Figur 1 dargestellte Stereorundfunkempfänger empfängt über eine Antenne 1 ein Frequenzspektrum, in welchem auch die momentan empfangbaren Stereosender liegen. Mit einem Tuner 2 wird der Stereorundfunkempfänger auf die Frequenz des gewünschten Stereosenders abgestimmt. Der Ausgang des Tuners 2 ist mit einer Zwischenfrequenzstufe 3 verbunden, in dem die auf die Zwischenfrequenz des Empfängers umgesetzte Sendermodulation zunächst verstärkt und danach von der Zwischenfrequenz demoduliert wird. An einem ersten Ausgang 4 der ZF-Stufe 3 läßt sich die Sendermodulation, das sogenannte MPX-Signal, abgreifen. Ein zweiter Ausgang 5 der ZF-Stufe 3 liefert ein Signal immer dann, wenn die Trägerfrequenz des eingestellten Senders die Antenne 1 auf mehreren Wegen erreicht, wenn also ein sogenannter Mehrwegeempfang vorliegt.

Die in dem MPX-Signal enthaltenen beiden Stereosignale werden in einem Stereodecoder 6 getrennt und in die zugeordneten Tonkanäle 7 und 8 eingespeist. Jeder Tonkanal umfaßt einen NF-Verstärker und einen Lautsprecher, mit dem das jeweilige Stereosignal hörbar gemacht wird.

Der Stereodecoder 6 umfaßt u. a. eine Kanaltrennstufe 9 und eine Zwangsmonoschaltstufe 10. Die Zwangsmonoschaltstufe 10 bewirkt die monophone Wiedergabe der an sich verfügbaren Stereosignale über beide Tonkanäle 7 und 8. Sie wird immer dann von einem Detektor 11 wirksam geschaltet, wenn dieser an dem zweiten Ausgang 5 der ZF-Stufe 3 ein Steuersignal ausreichender Größe erkennt, das, wie bereits erwähnt, einen Mehrwegeempfang der Trägerfrequenz des eingestellten Senders anzeigt.

Bei einem solchen Mehzwegeempfang bestehen Phasenunterschiede zwischen den auf unterschiedlichen Wegen zur Antenne 1 gelangten Trägerfrequenzen des Stereosenders, die unter anderem eine Beeinträchtigung der Trennbarkeit der beiden Stereosignale zur Folge haben. Die Zwangsmonoschaltstufe 10 vermeidet solche in den getrennten Kanälen hervorgerufenen Störungen, die die Wiedergabequalität beeinträchtigen.

Der bisher beschriebene Stereorundfunkempfänger entspricht dem verbreiterten Stand der Technik vor allem bei Autoradios, so daß auf die weitere Erläuterung der einzelnen Bausteine hier verzichtet werden kann.

In dem in Figur 1 dargestellten Stereorundfunkempfänger ist neben der Zwangsmonoschaltstufe 10 an dem Ausgang des Detektors 11 noch ein Zeitglied 12 angeschlossen, welches mit einem Steuereingang der Kanaltrennstufe 9 verbunden ist.

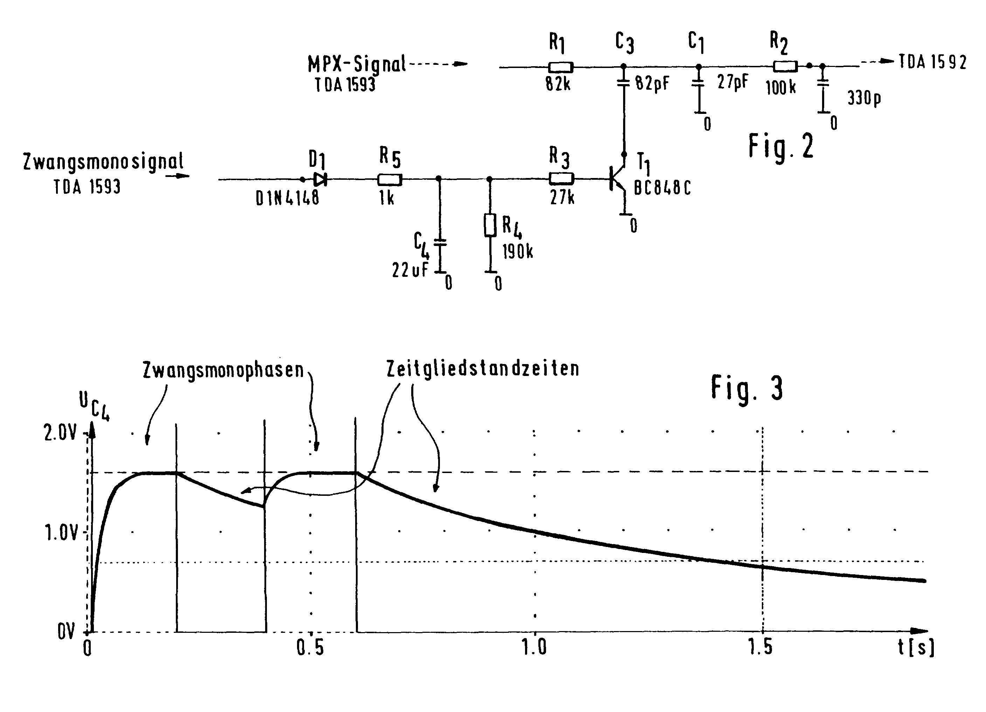

Die Kanaltrennstufe 9, kann wie in Figur 2 dargestellt, als ein an den MPX-Ausgang 4 der ZF-Stufe 3 angeschlossener steuerbarer Phasenschieber ausgebildet sein.

Fest eingestellte oder bei der Fertigung justierte Phasenschieber in den MPX-Signalweg sind dem Fachmann aus dem Stand der Technik seit langem bekannt. Sie werden bei der Schaltungsdimensionierung oder bei der Justierung so eingestellt, daß sie eine optimale Kanaltrennung bewirken.

Die Erfindung wird in dieser Ausführungsform dadurch verwirklicht, daß der Phasenschieber zur Vermeidung der eingangs genannten Störung als ein durch ein Zeitglied steuerbarer Phasenschieber ausgelegt wird und derart bemessen ist, daß während der Standzeit des Zeitgliedes die optimale Kanaltrennung aufgehoben und auf einem minderen Maß festgehalten wird.

Ein solcher Phasenschieber besteht z. B. aus einem an den MPX-Ausgang des (ZF-IC) TDA 1593 angeschlossenen Längswiderstand R₁ von 82 k0hm, einem nach Masse geführten Kondensator C₁ von 27 pF einem weiteren Längswiderstand R₂ von 100 kOhm und einem zweiten nach Masse geführten Kondensator C₂ von 330 pF. Der Ausgang dieses Phasenschiebers ist auf den MPX-Eingang, dem PIN 20, des Stereodecoders TDA 1592 geführt.

Parallel zum Kondensator C₁ ist ein dritter Kondensator C₃ von 82 pF an den Längswiderstand R₁ angeschlossen. Der Fußpunkt des Kondensators C₃ ist mit dem Kollektor eines Transistors T₁, z. B. eines BC 848 C, verbunden, dessen Emitter an Masse liegt.

Im Basiskreis des Transistors T₁ liegt ein Längswiderstand R₃ von 27 kOhm, auf den ein Querwiderstand R₄ von 190 kOhm folgt, der nach Masse geschaltet ist. Parallel zum Widerstand R₄ liegt ein vierter Kondensator C₄ von 22 µF. Der Hochpunkt des Kondensators C₄ ist über einen Längswiderstand R₅ von 1 kOhm mit der Kathode einer Entkoppeldiode D₁, z. B. N4148, verbunden, die an den Ausgang des Detektors 11 angeschlossen ist.

Bei kritischer Größe des Mehrwegeempfangs erscheint an diesem Ausgang ein Detektorsignal, daß den Transistor T₁ mit der Zeitkonstanten R₅/C₄ öffnet. Hierdurch wird der Kondensator C₃ parallel zum Kondensator C₁ geschaltet und dadurch die optimale Kanaltrennung vermindert. Mit den angegebenen Werten wird das mögliche Übersprechen zwischen den Kanälen auf 12 dB eingestellt. Mit einer Änderung der Werte kann eine Variation der Minderung der Kanaltrennung bewirkt werden.

Durch das Detektorsignal wird aber zugleich die Zwangsmonoschaltstufe (z. B. über den PIN 16 am IC 1592) eingeschaltet, so daß die Verminderung der Kanaltrennung sich während des Mehrwegeempfangs selbst nicht bemerkbar macht. Verläßt das Fahrzeug, in dem der Stereorundfunkempfänger beispielsweise als Autoradio eingebaut ist, das Gebiet des Mehrwegeempfangs des eingestellten Senders, dann entfällt das Detektorsignal. Dadurch wird die Zwangsmonoschaltstufe 10 deaktiviert. Zu diesem Zeitpunkt sinkt aber auch das Potential an der Anode der Diode D₁ wieder. Jedoch wird der Transistor D₁ noch durch die Ladung des Kondensators C₅ weiter durchgeschaltet. Der Kondensator wird nun über den Querwiderstand R₃ langsam entladen und hält den Transistor T₁ noch für eine gewissen Zeitspanne offen. Die Dauer dieser Zeitspanne wird durch die beiden Bauelemente C₄/R₄ bestimmt, die das Zeitglied bilden. Am Ende der Standzeit dieses Zeitgliedes geht der Transistor T₁ langsam in den gesperrten Zustand über. Infolgedessen nimmt die Kanaltrennung durch den Phasenschieber kontinuierlich auf den optimalen Wert wieder zu.

Wenn in der Standzeit des Zeitgliedes C₄/R₄, in der der Transistor T₁ voll geöffnet ist, das Fahrzeug in ein neues Mehrwegeempfangsgebiet des eingestellten Senders einfährt, dann erscheint erneut das Detektorsignal und lädt den Kondensator C₁ wieder auf.

Figur 3 zeigt den Verlauf der Ladung des Kondensators C₄, an deren oberen Grenzwert der Transistor T₁ voll geöffnet ist und an dessen unterem Schwellwert die Sperrung des Transistors T₁ beginnt. In Figur 3 wird die Ladung des Kondensators C₄ durch das erstmalige Auftreten des Detektorsignals eingeleitet. Am Ende des Detektorsignals beginnt die Standzeit des Zeitgliedes C₄/R₄ abzulaufen. Der Kondensator C₄ wird danach gegebenenfalls durch ein Neuauftreten des Detektorsignals von neuem geladen. Nach dem erneuten Start des Ablaufs der Standzeit des Zeitgliedes wird an deren Ende, z. B. am Zeitpunkt 1,5 sec. in Figur 3, die Kanaltrennung kontinuierlich auf den optimalen Wert angehoben.

In der in Figur 4 gezeigten Ausführungsform der Erfindung wird die vorübergehende Minderung der Kanaltrennung nach einer Mehrwegeempfangsperiode mit Hilfe einer Kanaltrennstufe neu eingestellt, die für die Steuerung eines feldstärkeabhängigen gleitenden Mono-Stereo-Übergang an sich bekannt ist. Bei einem mit einer solchen Schaltung zusätzlich zur Zwangsmonoumschaltstufe 10 ausgerüsteten Stereorundfunkempfänger steuert das Zeitglied 12 einen Umschalter 13, der in den Eingang der Schaltung für den feldstärkegesteuerten gleitenden Mono-Stereo-Übergang eingeschleift ist, welcher normalerweise an den Feldstärkemeßausgang 14 des Tuners 2 angeschlossenen ist. Der Umschalter 13 wird während oder nach einer Mehrwegeempfangssituation für die Dauer der Standzeit des Zeitgliedes 12 mit einem Geber 15 verbunden, der eine feste Feldstärke simuliert, bei der z. B. der gleitende Mono-Stereo-Übergang sich auf 12 dB einstellt.

Die Erfindung wird in dieser Ausführungsform dadurch verwirklicht, daß eine bisher nur vom Feldstärkemeßsignal abhängige Schaltung für einen gleitenden Mono-Stereo-Übergang auch bei maximaler Empfangsfeldstärke auf ein verringertes Maß der Kanaltrennung durch Vorgabe eines eine mindere Feldstärke vortäuschenden Geberwertes zeitweise eingestellt wird, nachdem ein Mehrwegeempfangsgebiet verlassen worden ist.

Die analogen Bausteine in den vorstehend beschriebenen Schaltungen können ohne Schwierigkeit durch digital arbeitende Prozessoren ersetzt werden, wenn das MPX-Signal in digitaler Form an der ZF-Stufe 3 abgreifbar ist bzw. die Signale an den Eingängen der beiden Tonkanäle 7 und 8 in digitaler Form vorliegen.

Im ersten Fall wird das Programm des Stereoprozessors 6 zur Verarbeitung des MPX-Signals durch ein Programm im Sinn der ersten Ausführungsform ergänzt. Im zweiten Fall wird das Programm des Stereodecoders 6 für einen gleitenden Mono-Stereo-Übergang im Sinn der zweiten Ausführungsform ergänzt.

In beiden Programmen wird der Zählerstand, der das verminderte Maß der Kanaltrennung während der Standzeit des Zeitgliedes festhält, nach Ablauf der Standzeit des Zeitgliedes in Richtung der Zunahme der Kanaltrennung hochgezählt.

## Patentansprüche

1. Stereorundfunkempfänger mit einem Detektor (11) für Mehrwegeempfang eines Stereorundfunksenders, welcher Detektor (11) bei Auftreten eines Mehrwegeempfangs einen Umschalter (10) zur Umschaltung von stereophoner auf monophone Wiedergabe steuert, und mit einem Zeitglied (12), dadurch gekennzeichnet, daß der Umschalter (10) nur während der Dauer des Mehrwegeempfangs eine monophone Wiedergabe bewirkt und daß das Zeitglied vom Detektor (11) angesteuert wird und nach dem Ende des Mehrwegeempfangs während seiner Standzeit über eine Kanaltrennstufe (9) die Stereokanaltrennung auf einem vorgegebenen minderen Maß zwischen minimaler und maximaler Stereokanaltrennung festhält und damit eine stereophone Wiedergabe mit reduzierter Kanaltrennung bewirkt.

2. Stereorundfunkempfänger nach Anspruch 1,
dadurch gekennzeichnet,
daß das vorgegebene Maß 12 dB beträgt.

3. Stereorundfunkempfänger nach Anspruch 1 oder 2,
gekennzeichnet
durch einen von dem Zeitglied (12) geschalteten Phasenschieber (R₁-D₁) im MPX-Signalweg des Stereorundfunkempfängers.

4. Stereorundfunkempfänger nach Anspruch 1 oder 2 mit einer von der Feldstärke abhängigen gleitenden Mono-Stereo-Umschaltung,
dadurch gekennzeichnet,
daß das Zeitglied (12) einen weiteren Umschalter (13) im Eingangskreis der Mono-Stereo-Umschaltung steuert, welcher die Feldstärkemeßeinheit (14) ausschaltet und für die Zeit der Umschaltung eine feste, mindere Feldstärke vorgibt.

5. Stereorundfunkempfänger nach Anspruch 1 oder 2 mit digital arbeitenden Signalprozessoren in den Signalwegen, in denen das Maß der Kanaltrennung durch einen digitalen Zählerstand bestimmt wird,
dadurch gekennzeichnet,
daß während der Standzeit des Zeitgliedes (12) der Zählerstand auf einem einstellbaren, vorgegebenen Wert festgehalten und danach zur Erhöhung der Kanaltrennung kontinuierlich verändert wird.

6. Stereorundfunkempfänger nach einem der vorhergehenden Ansprüche,
dadurch gekennzeichnet,
daß das Zeitglied (12) nach Ablauf seiner Standzeit die Kanaltrennung kontinuierlich auf das optimale Maß anhebt.

7. Stereorundfunkempfänger nach einem der vorhergehenden Ansprüche,
dadurch gekennzeichnet,
daß die Standzeit des Zeitgliedes (12) durch ein während einer ersten Standzeit erneutes Wirksamwerden des Detektors (11) erneut gestartet wird.

8. Stereorundfunkempfänger nach Anspruch 3,
dadurch gekennzeichnet,
daß dem ersten Kondensator (C₁) in dem Phasenschieber (R₁-D₁) eine Reihenschaltung aus einem weiteren Kondensator (C₃) und einem Einschalter (T₁) parallel geschaltet ist, und daß der Steuereingangskreis des Einschalters (T₁) das aus einer RC-Kombination (R₃, R₄, R₅, C₄) gebildete Zeitglied (12) umfaßt, dem das Ausgangssignal des Detektors (11) zugeführt wird.

## Claims

1. Stereo broadcast radio receiver having a detector (11) for multipath reception of a stereo broadcast radio transmitter, which detector (11) controls a changeover switch (10) to change over from stereophonic to monophonic reproduction when multipath reception occurs, and having a timer (12), characterized in that the changeover switch (10) causes monophonic reproduction only for the duration of the multipath reception, and in that the timer is actuated by the detector (11) and, after the end of multipath reception and during its active time uses a channel separation stage (9) to fix the stereo channel separation to a predetermined reduced level between minimum and maximum stereo channel separation, and thus results in stereophonic reproduction with reduced channel separation.

2. Stereo broadcast radio receiver according to Claim 1, characterized in that the predetermined level is 12 dB.

3. Stereo broadcast radio receiver according to Claim 1 or 2, characterized by a phase shifter (R₁ - D₁), which is switched by the timer (12), in the MPX signal path of the stereo broadcast radio receiver.

4. Stereo broadcast radio receiver according to Claim 1 or 2, having a smooth mono-stereo changeover that is a function of the field strength, characterized in that the timer (12) controls a further changeover switch (13) in the input circuit of the mono-stereo changeover which switches the field-strength measurement unit (14) off and presets a fixed, lower field strength for the time of the changeover.

5. Stereo broadcast radio receiver according to Claim 1 or 2 having digitally processing signal processors in the signal paths, in which the level of the channel separation is determined by a digital count, characterized in that, during the active time of the timer (12), the count is fixed at an adjustable, predetermined value and, after this, is continuously varied in order to increase the channel separation.

6. Stereo broadcast radio receiver according to one of the preceding claims, characterized in that, after its active time has elapsed, the timer (12) continuously raises the channel separation to the optimum level.

7. Stereo broadcast radio receiver according to one of the preceding claims, characterized in that the active time of the timer (12) is started once again by the detector (11) coming into action once again during a first active time.

8. Stereo broadcast radio receiver according to Claim 3, characterized in that a series of circuits comprising a further capacitor (C₃) and an on-switch (T₁) is connected in parallel with the first capacitor (C₁) in the phase shifter (R₁-D₁), and in that the control input circuit of the on-switch (T₁) comprises the timer (12) formed from an RC combination (R₃, R₄, R₅, C₄), to which the output signal from the detector (11) is supplied.

## Revendications

1. Récepteur radio stéréo comprenant un détecteur (11) pour une réception par chemins multiples d'un émetteur radio stéréo,
à l'arrivée d'une réception par chemins multiples, le détecteur (11) commande un commutateur (10) pour commuter la reproduction en mode stéréo sur celle en mode mono, et
un élément de temporisation (12),
caractérisé en ce que
- le commutateur (10) assure une reproduction monophonique seulement pendant la durée de la réception par chemins multiples, et
- l'élément de temporisation est commandé par le détecteur (11) et, à la fin de la réception par chemins multiples, pendant sa durée de mise en oeuvre, par un étage de canal (9), la séparation de canaux stéréophoniques est maintenue à une valeur réduite prédéterminée comprise entre une séparation minimale et une séparation maximale des canaux stéréo, et produit une reproduction stéréophonique avec une séparation réduite des canaux.

2. Récepteur radio stéréo selon la revendication 1,
caractérisé en ce que
la mesure prédéterminée est égale à 12 dB.

3. Récepteur radio stéréo selon la revendication 1 ou 2,
caractérisé en ce que
le chemin du signal MPX du récepteur radio stéréo comporte un déphaseur (R₁-D₁) commuté par l'élément de temporisation (12).

4. Récepteur radio stéréo selon la revendication 1 ou 2, comportant une commutation mono/stéréo glissante, dépendant de l'intensité du champ,
caractérisé en ce que
l'élément de temporisation (12) commande un autre commutateur (13) du circuit d'entrée du commutateur mono/stéréo qui coupe l'unité de mesure d'intensité de champ (14) et prédétermine une intensité de champ fixe, réduite, pour la durée de la commutation.

5. Récepteur radio stéréo selon la revendication 1 ou 2,
comportant des processeurs numériques de signaux selon des chemins de signaux au cours desquels on détermine la mesure de la séparation des canaux par un état de comptage numérique,
caractérisé en ce que
pendant le temps de mise en oeuvre de l'élément de temporisation (12), l'état de comptage est fixé à une valeur prédéterminée réglable puis on modifie cet état de manière continue par la séparation des canaux.

6. Récepteur radio stéréo selon l'une des revendications précédentes,
caractérisé en ce que
l'élément de temporisation (12) relève la séparation des canaux de manière continue jusqu'à la valeur optimale à la fin de son temps de mise en oeuvre.

7. Récepteur radio stéréo selon l'une quelconque des revendications précédentes,
caractérisé en ce que
le temps de mise en oeuvre de l'élément de temporisation (12) est redémarré par la remise à l'état actif du détecteur (11) pendant un premier temps d'attente.

8. Récepteur radio stéréo selon la revendication 3,
caractérisé par
- un montage en série formé d'un autre condensateur (C₃) et d'un interrupteur (T₁), monté pour le premier condensateur (C₁) dans le déphaseur (R₁-D₁) , et
- le circuit de commande d'entrée du commutateur (T₁) comprend un élément de temporisation (12) formé d'une combinaison RC (R₃, R₄, R₅, C₄) qui reçoit le signal de sortie du détecteur (11).
